# EUROPEAN PATENT SPECIFICATION

(11) **EP 1 850 324 B1**
(45) Date of publication and mention of the grant of the patent: **21.09.2011**
(21) Application number: 07014802.8
(22) Date of filing: 22.03.2002
(51) Int. Cl.: G10L 15/06, G10L 15/14, G10L 15/12

(54) **Voice recognition system using implicit speaker adaption**
Spracherkennungssystem mittels impliziter Sprecheradaption
Système de reconnaissance vocale avec adaptation implicite au locuteur

(30) Priority: 28.03.2001 US 821606
(43) Date of publication of application: 31.10.2007
(62) Divisional of application: 02725288.1
(73) Proprietor: Qualcomm, Incorporated, San Diego, CA 92121-1714 (US)
(72) Inventor: Malayath, Narendranath, San Diego, CA 92121-1714 (US); Dejaco, Andrew P., San Diego, CA 92121-1714 (US); Chang, Chienchung, San Diego, CA 92121-1714 (US); Jalil, Suhail, San Diego, CA 92121-1714 (US); Bi, Ning, San Diego, CA 92128 (US); Garudadri, Harinath, San Diego, CA 92129 (US)
(74) Representative: Carstens, Dirk Wilhelm

(56) References cited:
- EP-A- 1 011 094
- EP-A- 1 374 223
- WO-A-02/07148
- WO-A-02/21513
- US-A- 5 091 947
- US-A- 5 734 793

## Description

### BACKGROUND

### Field

The present invention relates to speech signal processing. More particularly, the present invention relates to a novel voice recognition method and apparatus for achieving improved performance through unsupervised training.

### Background

Voice recognition represents one of the most important techniques to endow a machine with simulated intelligence to recognize user voiced commands and to facilitate human interface with the machine. Systems that employ techniques to recover a linguistic message from an acoustic speech signal are called voice recognition (VR) systems. **FIG**. **1** shows a basic VR system having a preemphasis filter **102**, an acoustic feature extraction (AFE) unit **104,** and a pattern matching engine **110.** The AFE unit **104** converts a series of digital voice samples into a set of measurement values (for example, extracted frequency components) called an acoustic feature vector. The pattern matching engine **110** matches a series of acoustic feature vectors with the templates contained in a VR acoustic model **112.** VR pattern matching engines generally employ either Dynamic Time Warping (DTW) or Hidden Markov Model (HMM) techniques. Both DTW and HMM are well known in the art, and are described in detail in Rabiner, L. R. and Juang, B. H., FUNDAMENTALS OF SPEECH RECOGNITION, Prentice Hall, 1993. When a series of acoustic features matches a template in the acoustic model **112**, the identified template is used to generate a desired format of output, such as an identified sequence of linguistic words corresponding to input speech.

As noted above, the acoustic model **112** is generally either a HMM model or a DTW model. A DTW acoustic model may be thought of as a database of templates associated with each of the words that need to be recognized. In general, a DTW template consists of a sequence of feature vectors that has been averaged over many examples of the associated word. DTW pattern matching generally involves locating a stored template that has minimal distance to the input feature vector sequence representing input speech. A template used in an HMM based acoustic model contains a detailed statistical description of the associated speech utterance. In general, a HMM template stores a sequence of mean vectors, variance vectors and a set of transition probabilities. These parameters are used to describe the statistics of a speech unit and are estimated from many examples of the speech unit. HMM pattern matching generally involves generating a probability for each template in the model based on the series of input feature vectors associated with the input speech. The template having the highest probability is selected as the most likely input utterance.

"Training" refers to the process of collecting speech samples of a particular speech segment or syllable from one or more speakers in order to generate templates in the acoustic model **112.** Each template in the acoustic model is associated with a particular word or speech segment called an utterance class. There may be multiple templates in the acoustic model associated with the same utterance class. "Testing" refers to the procedure for matching the templates in the acoustic model to a sequence of feature vectors extracted from input speech. The performance of a given system depends largely upon the degree of match between the input speech of the end-user and the contents of the database, and hence on the match between the reference templates created through training and the speech samples used for VR testing.

The two common types of training are supervised training and unsupervised training. In supervised training, the utterance class associated with each set of training feature vectors is known a priori. The speaker providing the input speech is often provided with a script of words or speech segments corresponding to the predetermined utterance classes. The feature vectors resulting from the reading of the script may then be incorporated into the acoustic model templates associated with the correct utterance classes.

In unsupervised training, the utterance class associated with a set of training feature vectors is not known a priori. The utterance class must be correctly identified before a set of training feature vectors can be incorporated into the correct acoustic model template. In unsupervised training, a mistake in identifying the utterance class for a set of training feature vectors can lead to a modification in the wrong acoustic model template. Such a mistake generally degrades, rather than improves, speech recognition performance. In order to avoid such a mistake, any modification of an acoustic model based on unsupervised training must generally be done very conservatively. A set of training feature vectors is incorporated into the acoustic model only if there is relatively high confidence that the utterance class has been correctly identified. Such necessary conservatism makes building an SD acoustic model through unsupervised training a very slow process. Until the SD acoustic model is built in this way, VR performance will probably be unacceptable to most users.

Optimally, the end-user provides speech acoustic feature vectors during both training and testing, so that the acoustic model **112** will match strongly with the speech of the end-user. An individualized acoustic model that is tailored to a single speaker is also called a speaker dependent (SD) acoustic model. Generating an SD acoustic model generally requires the end-user to provide a large amount of supervised training samples. First, the user must provide training samples for a large variety of utterance classes. Also, in order to achieve the best performance, the end-user must provide multiple templates representing a variety of possible acoustic environments for each utterance class. Because most users are unable or unwilling to provide the input speech necessary to generate an SD acoustic model, many existing VR systems instead use generalized acoustic models that are trained using the speech of many "representative" speakers. Such acoustic models are referred to as speaker independent (SI) acoustic models, and are designed to have the best performance over a broad range of users. SI acoustic models, however, may not be optimized to any single user. A VR system that uses an SI acoustic model will not perform as well for a specific user as a VR system that uses an SD acoustic model tailored to that user. For some users, such as those having a strong foreign accents, the performance of a VR system using an SI acoustic model can be so poor that they cannot effectively use VR services at all.

Optimally, an SD acoustic model would be generated for each individual user. As discussed above, building SD acoustic models using supervised training is impractical. But using unsupervised training to generate a SD acoustic model can take a long time, during which VR performance based on a partial SD acoustic model may be very poor. There is a need in the art for a VR system that performs reasonably well before and during the generation of an SD acoustic model using unsupervised training.

Attention is drawn to the document EP-A-1 011 094 which relates to a method for preventing adaptation to misrecognized words in unsupervised or on-line automatic speech recognition systems. Confidence measures are used or the user reaction is interpreted to decide whether a recognized phoneme, several phonemes, a word, several words or a whole utterance should be used for adaptation of the speaker independent model set to a speaker adapted model set or not and, in case an adaptation is executed, how strong the adaptation with this recognized utterance or part of this recognized utterance should be performed. Furthermore, a verification of the speaker adaptation performance is proposed to secure that the recognition rate never decreases, but only increases or stays at the same level.

### SUMMARY

In accordance with the present invention, a method for performing voice recognition, as set forth in claim 1, is provided. Further embodiments are claimed in the dependent claims.

The methods and apparatus disclosed herein are directed to a novel and improved voice recognition (VR) system that utilizes a combination of speaker independent (SI) and speaker dependent (SD) acoustic models. At least one Sl acoustic model is used in combination with at least one SD acoustic model to provide a level of speech recognition performance that at least equals that of a purely SI acoustic model. The disclosed hybrid SI/SD VR system continually uses unsupervised training to update the acoustic templates in the one or more SD acoustic models. The hybrid VR system then uses the updated SD acoustic models, alone or in combination with the at least one SI acoustic model, to provide improved VR performance during VR testing.

The word "exemplary" is used herein to mean "serving as an example, instance, or illustration." Any embodiment described as an "exemplary embodiment" is not necessarily to be construed as being preferred or advantageous over another embodiment.

### BRIEF DESCRIPTION OF THE DRAWINGS

The features, objects, and advantages of the presently disclosed method and apparatus will become more apparent from the detailed description set forth below when taken in conjunction with the drawings in which like reference characters identify correspondingly throughout and wherein:

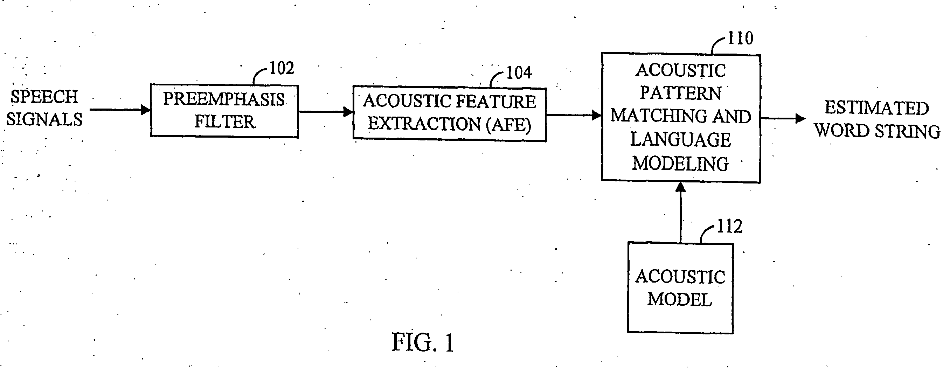

**FIG. 1** shows a basic voice recognition system;

**FIG. 2** shows a voice recognition system according to an exemplary embodiment;

**FIG. 3** shows a method for performing unsupervised training.

**FIG. 4** shows an exemplary approach to generating a combined matching score used in unsupervised training.

**FIG. 5** is a flowchart showing a method for performing voice recognition (testing) using both speaker independent (SI) and speaker dependent (SD) matching scores;

**FIG. 6** shows an approach to generating a combined matching score from both speaker independent (SI) and speaker dependent (SD) matching scores; and

### DETAILED DESCRIPTION

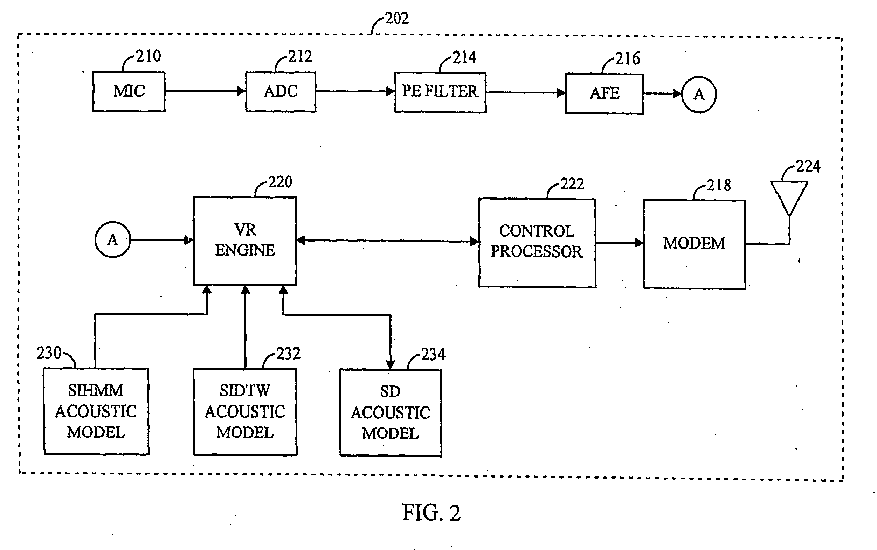

**FIG. 2** shows an exemplary embodiment of a hybrid voice recognition (VR) system as might be implemented within a wireless remote station **202**. In an exemplary embodiment, the remote station **202** communicates through a wireless channel (not shown) with a wireless communication network (not shown). For example, the remote station **202** may be a wireless phone communicating with a wireless phone system. One skilled in the art will recognize that the techniques described herein may be equally applied to a VR system that is fixed (non-portable) or does not involve a wireless channel.

In the embodiment shown, voice signals from a user are converted into electrical signals in a microphone (MIC) **210** and converted into digital speech samples in an analog-to-digital converter (ADC) **212.** The digital sample stream is then filtered using a preemphasis (PE) filter **214**, for example a finite impulse response (FIR) filter that attenuates low-frequency signal components.

The filtered samples are then analyzed in an acoustic feature extraction (AFE) unit **216**. The AFE unit **216** converts digital voice samples into acoustic feature vectors. In an exemplary embodiment, the AFE unit **216** performs a Fourier Transform on a segment of consecutive digital samples to generate a vector of signal strengths corresponding to different frequency bins. In an exemplary embodiment, the frequency bins have varying bandwidths in accordance with a bark scale. In a bark scale, the bandwidth of each frequency bin bears a relation to the center frequency of the bin, such that higher-frequency bins have wider frequency bands than lower-frequency bins. The bark scale is described in Rabiner, L. R. and Juang, B. H., FUNDAMENTALS OF SPEECH RECOGNITION, Prentice Hall, 1993 and is well known in the art.

In an exemplary embodiment, each acoustic feature vector is extracted from a series of speech samples collected over a fixed time interval. In an exemplary embodiment, these time intervals overlap. For example, acoustic features may be obtained from 20-millisecond intervals of speech data beginning every ten milliseconds, such that each two consecutive intervals share a 10-millisecond segment. One skilled in the art would recognize that the time intervals might instead be non-overlapping or have non-fixed duration without departing from the scope of the embodiments described herein.

The acoustic feature vectors generated by the AFE unit **216** are provided to a VR engine **220**, which performs pattern matching to characterize the acoustic feature vector based on the contents of one or more acoustic models **230**, **232**, and **234**.

In the exemplary embodiment shown in **FIG. 2**, three acoustic models are shown: a speaker-independent (SI) Hidden Markov Model (HMM) model **230,** a speaker-independent Dynamic Time Warping (DTW) model **232,** and a speaker-dependent (SD) acoustic model **234.** One skilled in the art will recognize that different combinations of SI acoustic models may be used in alternate embodiments. For example, a remote station **202** might include just the SIHMM acoustic model **230** and the SD acoustic model **234** and omit the SIDTW acoustic model **232.** Alternatively, a remote station **202** might include a single SIHMM acoustic model **230,** a SD acoustic model **234** and two different SIDTW acoustic models **232.** In addition, one skilled in the art will recognize that the SD acoustic model **234** may be of the HMM type or the DTW type or a combination of the two. In an exemplary embodiment, the SD acoustic model **234** is a DTW acoustic model.

As described above, the VR engine **220** performs pattern matching to determine the degree of matching between the acoustic feature vectors and the contents of one or more acoustic models **230**, **232**, and **234.** In an exemplary embodiment, the VR engine **220** generates matching scores based on matching acoustic feature vectors with the different acoustic templates in each of the acoustic models **230**, **232**, and **234.** For example, the VR engine **220** generates HMM matching scores based on matching a set of acoustic feature vectors with multiple HMM templates in the SIHMM acoustic model **230.** Likewise, the VR engine **220** generates DTW matching scores based on matching the acoustic feature vectors with multiple DTW templates in the SIDTW acoustic model **232.** The VR engine **220** generates matching scores based on matching the acoustic feature vectors with the templates in the SD acoustic model **234.**

As described above, each template in an acoustic model is associated with an utterance class. In an exemplary embodiment, the VR engine **220** combines scores for templates associated with the same utterance class to create a combined matching score to be used in unsupervised training. For example, the VR engine **220** combines SIHMM and SIDTW scores obtained from correlating an input set of acoustic feature vectors to generate a combined Sl score. Based on that combined matching score, the VR engine **220** determines whether to store the input set of acoustic feature vectors as a SD template in the SD acoustic model **234.** In an exemplary embodiment, unsupervised training to update the SD acoustic model **234** is performed using exclusively SI matching scores. This prevents additive errors that might otherwise result from using an evolving SD acoustic model **234** for unsupervised training of itself. An exemplary method of performing this unsupervised training is described in greater detail below.

In addition to unsupervised training, the VR engine **220** uses the various acoustic models (**230, 232, 234**) during testing. In an exemplary embodiment, the VR engine **220** retrieves matching scores from the acoustic models (**230, 232, 234**) and generates combined matching scores for each utterance class. The combined matching scores are used to select the utterance class that best matches the input speech. The VR engine **220** groups consecutive utterance classes together as necessary to recognize whole words or phrases. The VR engine **220** then provides information about the recognized word or phrase to a control processor **222,** which uses the information to determine the appropriate response to the speech information or command. For example, in response to the recognized word or phrase, the control processor **222** may provide feedback to the user through a display or other user interface. In another example, the control processor **222** may send a message through a wireless modem **218** and an antenna **224** to a wireless network (not shown), initiating a mobile phone call to a destination phone number associated with the person whose name was uttered and recognized.

The wireless modem **218** may transmit signals through any of a variety of wireless channel types including CDMA, TDMA, or FDMA. In addition, the wireless modem **218** may be replaced with other types of communications interfaces that communicate over a non-wireless channel without departing from the scope of the described embodiments. For example, the remote station **202** may transmit signaling information through any of a variety of types of communications channel including land-line modems, T1/E1, ISDN, DSL, ethernet, or even traces on a printed circuit board (PCB).

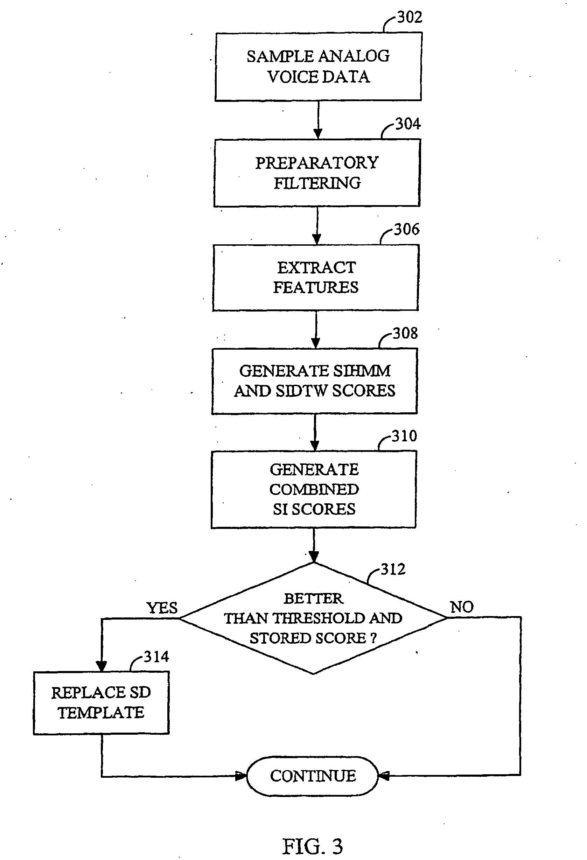

**FIG. 3** is a flowchart showing an exemplary method for performing unsupervised training. At step **302,** analog speech data is sampled in an analog-to-digital converter (ADC) (**212** in **FIG. 2**). The digital sample stream is then filtered at step **304** using a preemphasis (PE) filter (**214** in **FIG. 2**). At step **306,** input acoustic feature vectors are extracted from the filtered samples in an acoustic feature extraction (AFE) unit (**216** in **FIG. 2**). The VR engine (**220** in **FIG. 2**) receives the input acoustic feature vectors from the AFE unit **216** and performs pattern matching of the input acoustic feature vectors against the contents of the SI acoustic models (**230** and **232** in **FIG. 2**). At step **308**, the VR engine **220** generates matching scores from the results of the pattern matching. The VR engine **220** generates SIHMM matching scores by matching the input acoustic feature vectors with the SIHMM acoustic model **230,** and generates SIDTW matching scores by matching the input acoustic feature vectors with the SIDTW acoustic model **232.** Each acoustic template in the SIHMM and SIDTW acoustic models (**230** and **232**) is associated with a particular utterance class. At step **310,** SIHMM and SIDTW scores are combined to form combined matching scores.

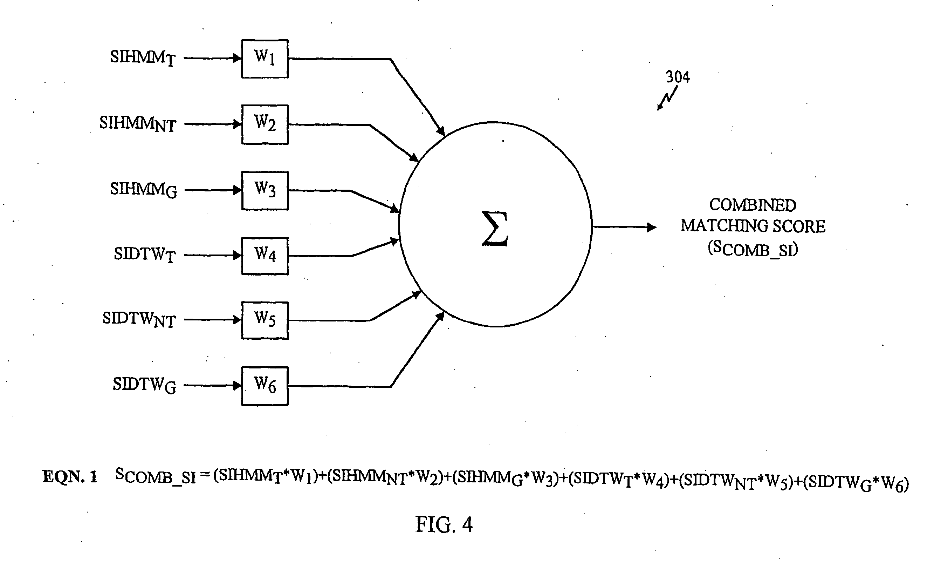

**FIG. 4** shows the generation of combined matching scores for use in unsupervised training. In the exemplary embodiment shown, the speaker independent combined matching score S_{COMB_SI} for a particular utterance class is a weighted sum according to **EQN. 1** as shown, where:
SIHMM_{T} is the SIHMM matching score for the target utterance class;
SIHMM_{NT} is the next best matching score for a template in the SIHMM acoustic model that is associated with a non-target utterance class (an utterance class other than the target utterance class);
SIHMM_{G} is the SIHMM matching score for the "garbage" utterance class;
SIDTW_{T} is the SIDTW matching score for the target utterance class;
SIDTW_{NT} is the next best matching score for a template in the SIDTW acoustic model that is associated with a non-target utterance class; and SIDTW_{G} is the SIDTW matching score for the "garbage" utterance class.

The various individual matching scores SIHMMₙ and SIDTWₙ may be viewed as representing a distance value between a series of input acoustic feature vectors and a template in the acoustic model. The greater the distance between the input acoustic feature vectors and a template, the greater the matching score. A close match between a template and the input acoustic feature vectors yields a very low matching score. If comparing a series of input acoustic feature vectors to two templates associated with different utterances classes yields two matching scores that are nearly equal, then the VR system may be unable to recognize either is the "correct" utterance class.

SIHMM_{G} and SIDTW_{G} are matching scores for "garbage" utterance classes. The template or templates associated with the garbage utterance class are called garbage templates and do not correspond to a specific word or phrase. For this reason, they tend to be equally uncorrelated to all input speech. Garbage matching scores are useful as a sort of noise floor measurement in a VR system. Generally, a series of input acoustic feature vectors should have a much better degree of matching with a template associated with a target utterance class than with the garbage template before the utterance class can be confidently recognized.

Before the VR system can confidently recognize an utterance class as the "correct" one, the input acoustic feature vectors should have a higher degree of matching with templates associated with that utterance class than with garbage templates or templates associated other utterance classes. Combined matching scores generated from a variety of acoustic models can more confidently discriminate between utterance classes than matching scores based on only one acoustic model. In an exemplary embodiment, the VR system uses such combination matching scores to determine whether to replace a template in the SD acoustic model (**234** in **FIG. 2**) with one derived from a new set of input acoustic feature vectors.

The weighting factors (W₁ ... W₆) are selected to provide the best training performance over all acoustic environments. In an exemplary embodiment, the weighting factors (W₁ ... W₆) are constant for all utterance classes. In other words, the Wₙ used to create the combined matching score for a first target utterance class is the same as the Wₙ value used to create the combined matching score for another target utterance class. In an alternate embodiment, the weighting factors vary based on the target utterance class. Other ways of combining shown in **FIG**. **4** will be obvious to one skilled in the art, and are to be viewed as within the scope of the embodiments described herein. For example, more than six or less than six weighted inputs may also be used. Another obvious variation would be to generate a combined matching score based on one type of acoustic model. For example, a combined matching score could be generated based on SIHMM_{T}, SIHMM_{NT}, and SIHMM_{G}. Or, a combined matching score could be generated based on SIDTW_{T}, SIDTW_{NT}, and SIDTW_{G}.

In an exemplary embodiment, W₁ and W₄ are negative numbers, and a greater (or less negative) value of S_{COMB} indicates a greater degree of matching (smaller distance) between a target utterance class and a series of input acoustic feature vectors. One of skill in the art will appreciate that the signs of the weighting factors may easily be rearranged such that a greater degree of matching corresponds to a lesser value without departing from the scope of the disclosed embodiments.

Turning back to **FIG. 3****,** at step **310,** combined matching scores are generated for utterance classes associated with templates in the HMM and DTW acoustic models (**230** and **232**). In an exemplary embodiment, combined matching scores are generated only for utterance classes associated with the best *n* SIHMM matching scores and for utterance classes associated with the best *m* SIDTW matching scores. This limit may be desirable to conserve computing resources, even though a much larger amount of computing power is consumed while generating the individual matching scores. For example, if *n*=*m*=3, combined matching scores are generated for the utterance classes associated with the top three SIHMM and utterance classes associated with the top three SIDTW matching scores. Depending on whether the utterance classes associated with the top three SIHMM matching scores are the same as the utterance classes associated with the top three SIDTW matching scores, this approach will produce three to six different combined matching scores.

At step **312**, the remote station **202** compares the combined matching scores with the combined matching scores stored with corresponding templates (associated with the same utterance class) in the SD acoustic model. If the new series of input acoustic feature vectors has a greater degree of matching than that of an older template stored in the SD model for the same utterance class, then a new SD template is generated from the new series of input acoustic feature vectors. In an embodiment wherein a SD acoustic model is a DTW acoustic model, the series of input acoustic vectors itself constitutes the new SD template. The older template is then replaced with the new template, and the combined matching score associated with the new template is stored in the SD acoustic model to be used in future comparisons.

In an alternate embodiment, unsupervised training is used to update one or more templates in a speaker dependent hidden markov model (SDHMM) acoustic model. This SDHMM acoustic model could be used either in place of an SDDTW model or in addition to an SDDTW acoustic model within the SD acoustic model **234**.

In an exemplary embodiment, the comparison at step **312** also includes comparing the combined matching score of a prospective new SD template with a constant training threshold. Even if there has not yet been any template stored in a SD acoustic model for a particular utterance class, a new template will not be stored in the SD acoustic model unless it has a combined matching score that is better (indicative of a greater degree of matching) than the training threshold value.

In an alternate embodiment, before any templates in the SD acoustic model have been replaced, the SD acoustic model is populated by default with templates from the SI acoustic model. Such an initialization provides an alternate approach to ensuring that VR performance using the SD acoustic model will start out at least as good as VR performance using just the SI acoustic model. As more and more of the templates in the SD acoustic model are updated, the VR performance using the SD acoustic model will surpass VR performance using just the SI acoustic model.

In an alternate embodiment, the VR system allows a user to perform supervised training. The user must put the VR system into a supervised training mode before performing such supervised training. During supervised training, the VR system has a priori knowledge of the correct utterance class. If the combined matching score for the input speech is better than the combined matching score for the SD template previously stored for that utterance class, then the input speech is used to form a replacement SD template. In an alternate embodiment, the VR system allows the user to force replacement of existing SD templates during supervised training.

The SD acoustic model may be designed with room for multiple (two or more) templates for a single utterance class. In an exemplary embodiment, two templates are stored in the SD acoustic model for each utterance class. The comparison at step **312** therefore entails comparing the matching score obtained with a new template with the matching scores obtained for both templates in the SD acoustic model for the same utterance class. If the new template has a better matching score than either older template in the SD acoustic model, then at step **314** the SD acoustic model template having the worst matching score is replaced with the new template. If the matching score of the new template is no better than either older template, then step **314** is skipped. Additionally, at step **312,** the matching score obtained with the new template is compared against a matching score threshold. So, until new templates having a matching score that is better than the threshold are stored in the SD acoustic model, the new templates are compared against this threshold value before they will be used to overwrite the prior contents of the SD acoustic model. Obvious variations, such as storing the SD acoustic model templates in sorted order according to combined matching score and comparing new matching scores only with the lowest, are anticipated and are to be considered within the scope of the embodiments disclosed herein. Obvious variations on numbers of templates stored in the acoustic model for each utterance class are also anticipated. For example, the SD acoustic model may contain more than two templates for each utterance class, or may contain different numbers of templates for different utterance classes.

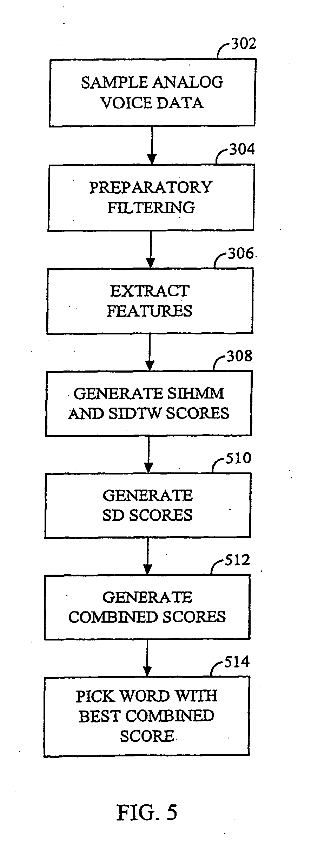

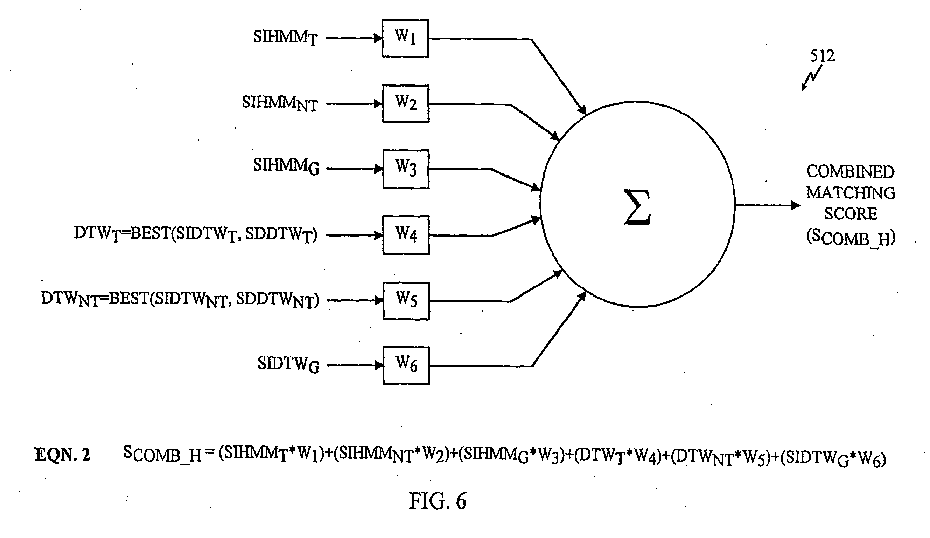

**FIG. 5** is a flowchart showing an exemplary method for performing VR testing using a combination of SI and SD acoustic models. Steps **302**, **304**, **306,** and **308** are the same as described for **FIG. 3**. The exemplary method diverges from the method shown in **FIG. 3** at step **510**. At step **510**, the VR engine **220** generates SD matching scores based on comparing the input acoustic feature vectors with templates in the SD acoustic model. In an exemplary embodiment, SD matching scores are generated only for utterance classes associated with the best *n* SIHMM matching scores and the best *m* SIDTW matching scores. In an exemplary embodiment, *n*=*m*=3. Depending on the degree of overlap between the two sets of utterance classes, this will result in generation of SD matching scores for three to six utterance classes. As discussed above, the SD acoustic model may contain multiple templates for a single utterance class. At step **512**, the VR engine **220** generates hybrid combined matching scores for use in VR testing. In an exemplary embodiment, these hybrid combined matching scores are based on both individual SI and individual SD matching scores. At step **514**, the word or utterance having the best combined matching score is selected and compared against a testing threshold. An utterance is only deemed recognized if its combined matching score exceeds this testing threshold. In an exemplary embodiment, the weights [W₁ ... W₆] used to generate combined scores for training (as shown in **FIG. 4**) are equal to the weights [W₁ ... W₆] used to generate combined scores for testing (as shown in **FIG. 6**), but the training threshold is not equal to the testing threshold.

**FIG**. **6** shows the generation of hybrid combined matching scores performed at step **512.** The exemplary embodiment shown operates identically to the combiner shown in **FIG. 4****,** except that the weighting factor W₄ is applied to DTW_{T} instead of SIDTW_{T} and the weighting factor W₅ is applied to DTW_{NT} instead of SIDTW_{NT}. DTW_{T} (the dynamic time warping matching score for the target utterance class) is selected from the best of the SIDTW and SDDTW scores associated with the target utterance class. Similarly, DTW_{NT} (the dynamic time warping matching score for the remaining non-target utterance classes) is selected from the best of the SIDTW and SDDTW scores associated with non-target utterance classes.

The SI/SD hybrid score S_{COMB_H} for a particular utterance class is a weighted sum according to **EQN. 2** as shown, where SIHMM_{T}, SIHMM_{NT}, SIHMM_{G}, and SIDTW_{G} are the same as in **EQN. 1.** Specifically, in **EQN. 2**:
SIHMM_{T} is the SIHMM matching score for the target utterance class;
SIHMM_{NT} is the next best matching score for a template in the SIHMM acoustic model that is associated with a non-target utterance class (an utterance class other than the target utterance class);
SIHMM_{G} is the SIHMM matching score for the "garbage" utterance class;
DTW_{T} is the best DTW matching score for SI and SD templates corresponding to the target utterance class;
DTW_{NT} is the best DTW matching score for SI and SD templates corresponding to non-target utterance classes; and
SIDTW_{G} is the SIDTW matching score for the "garbage" utterance class.
Thus, the SI/SD hybrid score S_{COMB_H} is a combination of individual SI and SD matching scores. The resulting combination matching score does not rely entirely on either SI or SD acoustic models. If the matching score SIDTW_{T} is better than any SDDTW_{T} score, then the SI/SD hybrid score is computed from the better SIDTW_{T} score. Similarly, if the matching score SDDTW_{T} is better than any SIDTW_{T} score, then the SI/SD hybrid score is computed from the better SDDTW_{T} score. As a result, if the templates in the SD acoustic model yield poor matching scores, the VR system may still recognize the input speech based on the SI portions of the SI/SD hybrid scores. Such poor SD matching scores might have a variety of causes including differences between acoustic environments during training and testing or perhaps poor quality input used for training.

In an alternate embodiment, the SI scores are weighted less heavily than the SD scores, or may even be ignored entirely. For example, DTW_{T} is selected from the best of the SDDTW scores associated with the target utterance class, ignoring the SIDTW scores for the target utterance class. Also, DTW_{NT} may be selected from the best of either the SIDTW or SDDTW scores associated with non-target utterance classes, instead of using both sets of scores.

Though the exemplary embodiment is described using only SDDTW acoustic models for speaker dependent modeling, the hybrid approach described herein is equally applicable to a VR system using SDHMM acoustic models or even a combination of SDDTW and SDHMM acoustic models. For example, by modifying the approach shown in **FIG. 6**, the weighting factor W₁ could be applied to a matching score selected from the best of SIHMM_{T} and SDHMM_{T} scores. The weighting factor W₂ could be applied to a matching score selected from the best of SIHMM_{NT} and SDHMM_{NT} scores.

Thus, disclosed herein is a VR method and apparatus utilizing a combination of SI and SD acoustic models for improved VR performance during unsupervised training and testing. Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. Also, though the embodiments are described primarily in terms of Dynamic Time Warping (DTW) or Hidden Markov Model (HMM) acoustic models, the described techniques may be applied to other types of acoustic models such as neural network acoustic models.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention as defined by the claims.

## Claims

1. A method for performing voice recognition comprising:
performing pattern matching of a first input speech segment with at least a first acoustic template from a speaker independent acoustic model (230, 232) to produce at least one input pattern matching score and to determine a recognized utterance class wherein the utterance class is a particular word or speech segment;
comparing the at least one input pattern matching score with a corresponding score associated with at least a second acoustic template from the acoustic model (234) of the speaker of the first input speech, the second acoustic template associated with the recognized utterance class; and
determining whether or not to update the at least a second acoustic template, wherein the at least a second acoustic template is updated if the at least one input pattern matching score is better than the corresponding score associated with the at least a second acoustic template.

2. The method of claim 1, wherein the performing pattern matching further comprises:
performing hidden markov model (HMM) pattern (230) matching of the first input speech segment with at least one HMM template to generate at least one HMM matching score;
performing dynamic time warping (DTW) pattern (232) matching of the first input speech segment with at least one DTW template to generate at least one DTW matching score; and
performing at least one weighted sum of the at least one HMM matching score and the at least one DTW matching score to generate the at least one input pattern matching score.

3. The method of claim 1, further comprising:
generating at least one speaker independent matching score by performing pattern matching of a second input speech segment with the at least a first acoustic template, wherein the at least a first acoustic template is speaker independent;
generating at least one speaker dependent matching score by performing pattern matching of a second input speech segment with the at least a second acoustic template, wherein the at least a second acoustic template is speaker dependent; and
combining the at least one speaker independent matching score with the at least one speaker dependent matching score to generate at least one combined matching score.

4. The method of claim 3, further comprising identifying the utterance class associated with the best of the at least one combined matching score.

5. The method of claim 1, wherein the method is further for performing unsupervised voice recognition training and testing comprising:
performing in a voice recognition engine (220) pattern matching of input speech from a speaker with contents of a speaker independent acoustic model (230, 232) to produce speaker independent pattern matching scores;
comparing the speaker independent pattern matching scores with scores associated with templates of a speaker dependent acoustic model (234) by the voice recognition engine (220), wherein the speaker dependent acoustic model is tailored to the speaker; and
if the speaker independent pattern matching scores are better than the scores associated with templates of the speaker dependent acoustic model (234), generating a new template for the speaker dependent acoustic model (234) based on the speaker independent pattern matching scores.

6. The method of claim 5, wherein the speaker independent acoustic model (230, 232) comprises at least one hidden markov model (HMM) acoustic model.

7. The method of claim 5, wherein the speaker independent acoustic model (230, 232) comprises at least one dynamic time warping (DTW) acoustic model.

8. The method of claim 5, wherein the speaker independent acoustic model (230, 232) comprises at least one hidden markov model (HMM) acoustic model and at least one dynamic time warping (DTW) acoustic model.

9. The method of claim 5, wherein the speaker independent acoustic model (230, 232) includes at least one garbage template, wherein the comparing includes comparing the input speech to the at least one garbage template.

10. The method of claim 5, wherein the speaker dependent acoustic model (234) comprises at least one dynamic time warping (DTW) acoustic model.

11. The method of claim 5, further comprising:
configuring the voice recognition engine (220) to compare a second input speech segment with the contents of the speaker independent acoustic model and the speaker dependent acoustic model to generate at least one combined speaker dependent and speaker independent matching score, and
identifying an utterance class having the best combined speaker dependent and speaker independent matching score.

12. The method of claim 11, wherein the speaker independent acoustic model (230, 232) comprises at least one hidden markov model (HMM) acoustic model (230).

13. The method of claim 11, wherein the speaker independent acoustic model (230, 232) comprises at least one dynamic time warping (DTW) acoustic model (232).

14. The method of claim 11, wherein the speaker independent acoustic model (230, 232) comprises at least one hidden markov model (HMM) acoustic model (230) and at least one dynamic time warping (DTW) acoustic model (232).

15. The method of claim 11, wherein the speaker dependent acoustic model (234) comprises at least one dynamic time warping (DTW) acoustic model.

16. The method of claim 1 further comprising:
performing pattern matching of the input speech segment with a speaker dependent acoustic template to generate at least one speaker dependent matching score; and
combining the at least one speaker independent matching score with the at least one speaker dependent matching score to generate at least one combined matching score, wherein each combined matching score corresponds to an utterance class and depends on the speaker independent pattern matching score for the utterance class and the speaker dependent pattern matching score for the utterance class.

17. The method of claim 1, wherein the step of performing and the step of combining are performed by a voice recognition engine (220).

18. A computer program product comprising instructions which, when executed by a processor, cause the processor to perform a method of any one of claims 1 to 17.

## Patentansprüche

1. Ein Verfahren zum Durchführen von Spracherkennung, wobei das Verfahren Folgendes aufweist:
Durchführen von Musterabgleich eines erstes Eingabesprachsegments mit wenigstens einer ersten Akustikvorlage von einem Sprecher unabhängigen Akustikmodell (230,232) zum Erzeugen von wenigstens einem Eingabemusterabgleichswert und zum Bestimmen einer erkannten Äußerungsklasse, wobei die Äußerungsklasse ein bestimmtes Wort oder Sprachsegment ist;
Vergleichen des wenigstens einen Eingabemusterabgleichswert mit einem entsprechenden Wert assoziiert mit wenigstens einer zweiten Akustikvorlage von dem Akustikmodell (234) des Sprechers von der ersten Eingabesprache, wobei die zweite Akustikvorlage mit der erkannten Äußerungsklasse assoziiert ist;
Bestimmen, ob die wenigstens eine zweite Akustikvorlage aktualisiert werden soll oder nicht, wobei die wenigstens eine zweite Akustikvorlage aktualisiert wird, wenn der wenigstens eine Eingabemusterabgleichswert besser ist als der entsprechende Wert, der mit wenigstens einer zweiten Akustikvorlage assoziiert ist.

2. Verfahren nach Anspruch 1, wobei das Durchführen von Musterabgleich weiterhin folgendes aufweist:
Durchführen von Hidden-Markov-Modell- bzw. HMM-Musterabgleich (230) das ersten Eingabesprachsegment mit wenigstens einer HMM-Vorlage zum Generieren von wenigstens einem HMM-Abgleichswert;
Durchführen von Dynamik-Time-Warping- bzw. DTW-Musterabgleich (232) des ersten Eingabesprachsegments mit wenigsten einer DTW-Vorlage zum Generieren von wenigstens einem DTW-Abgleichswert;
Durchführen von wenigstens einer gewichteten Summe des wenigstens einen HMM Abgleichswerts und des wenigstens einen DTW Abgleichswert zum Generieren von wenigstens einem Eingabemusterabgleichswert.

3. Verfahren nach Anspruch 1, das weiterhin folgendes aufweist:
Generieren von wenigstens einem sprecherunabhängigen Abgleichswert durch Durchführen von Musterabgleich eines zweiten Eingabesprachsegments mit der wenigstens einen ersten Akustikvorlage, wobei die wenigstens eine erste Akustikvorlage sprecherunabhängig ist;
Generieren von wenigstens einem sprecherabhängigen Abgleichswert durch Durchführen von Musterabgleich eines zweiten Eingabesprachsegments mit der wenigstens einen zweiten Akustikvorlage, wobei die wenigstens eine zweite Akustikvorlage sprecherabhängig ist;
Kombinieren des wenigstens einen sprecherunabhängigen Abgleichswerts mit dem wenigstens einen sprecherabhängigen Abgleichswert zum Generieren von wenigstens einem kombinierten Abgleichswert.

4. Verfahren nach Anspruch 3, wobei das Verfahren weiterhin das Identifizieren der Äußerungsklasse assoziiert mit dem Besten des wenigstens einen kombinierten Abgleichswerts aufweist:

5. Verfahren nach Anspruch 1, wobei das Verfahren weiterhin zum Durchführen von nicht kontrolliertem Spracheerkennungstraining und Testen ist, wobei das Verfahren folgendes aufweist:
Durchführen in einer Spracherkennungs-Engine (220) von Musterabgleich von Eingabesprache von einem Sprecher mit Inhalten eines sprecherunabhängigen Akustikmodells (230,232) zum Erzeugen von sprecherunabhängigen Musterabgleichswerten;
Vergleichen der sprecherunabhängigen Musterabgleichswerte mit Werten assoziiert mit Vorlagen eines sprecherabhängigen Akustikmodells (234) durch die Spracherkennungs-Engine (220), wobei das sprecherabhängige Akustikmodell auf den Sprecher zugeschnitten ist;
wenn die sprecherunabhängigen Musterabgleichswerte besser sind als die Werte assoziiert mit dem Vorlagen des sprecherabhängigen Akustikmodells (234), Generieren einer neuen Vorlage für das sprecherabhängige Akustikmodell (234) basierend auf dem sprecherunabhängigen Musterabgleichswerten.

6. Verfahren nach Anspruch 5, wobei das sprecherunabhängige Akustikmodell (230,232) wenigstens ein Hidden-Markov-Modell bzw. HMM Akustikmodell aufweist.

7. Verfahren nach Anspruch 5, wobei das sprecherunabhängige Akustikmodell (230,232) wenigstens ein Dynamic-Time-Warping- bzw. DTW-Akustikmodell aufweist.

8. Verfahren nach Anspruch 5, wobei das sprecherunabhängige Akustikmodell (230,232) wenigsten ein Hidden-Markov-Modell- bzw. HMM-Akustikmodell und wenigstens ein Dynamic-Time-Warping- bzw. DTW-Akustikmodell aufweist.

9. Verfahren nach Anspruch 5, wobei das sprecherunabhängige Akustikmodell (230,232) wenigstens eine Verwurfsvorlage beinhaltet, wobei das Vergleichen das Vergleichen der Eingabesprache mit wenigstens einer Verwurfsvorlage aufweist.

10. Verfahren nach Anspruch 5, wobei das sprecherabhängige Akustikmodell (234) wenigstens ein Dynamic-Time-Warping- bzw. DTW-Akustikmodell aufweist.

11. Verfahren nach Anspruch 5, das weiterhin folgendes aufweist:
Konfigurieren der Spracherkennungs-Engine (220) zum Vergleichen eines zweiten Eingabesprachsegments mit den Inhalten des sprecherunabhängigen Akustikmodells und sprecherabhängigen Akustikmodell zum Generieren von wenigstens einem kombinierten sprecherabhängigen und sprecherunabhängigen Abgleichswert, und Identifizieren einer Äußerungsklasse mit dem besten kombinierten sprecherabhängigen und sprecherunabhängigen Abgleichswert.

12. Verfahren nach Anspruch 11, wobei das sprecherunabhängige Akustikmodell (230,232) wenigstens ein Hidden-Markov-Modell bzw. HMM-Akustikmodell (230) aufweist.

13. Verfahren nach Anspruch 11, wobei das sprecherunabhängige Akustikmodell (230,232) wenigstens ein Dymanic-Time-Warping bzw. DTW Akustikmodell (232) aufweist.

14. Verfahren nach Anspruch 11, wobei das sprecherunabhängige Akustikmodell (230,232) wenigstens ein HIDDEN-markov-Modell bzw. HMM-Akustikmodell (230) und wenigstens ein Dynamic-Time-Warping bzw. DTW Akustikmodell (232) aufweist.

15. Verfahren nach Anspruch 11, wobei das sprecherabhängige Akustikmodell (234) wenigstens ein Dynamic-Time-Warping bzw. DTW Akustikmodell aufweist.

16. Verfahren nach Anspruch 1, das weiterhin folgendes aufweist:
Durchführen von Musterabgleich des Eingabesprachsegments mit einer sprecherabhängigen Akustikvorlage zum Generieren von wenigstens einem sprecherabhängigen Abgleichswert; und
Kombinieren des wenigstens einen sprecherunabhängigen Abgleichswert mit dem wenigstens einen sprecherabhängigen Abgleichswerts zum Generieren von wenigstens einem kombinierten Abgleichswert, wobei jeder kombinierte Abgleichswert einer Äußerungsklasse entspricht und von dem sprecherunabhängigen Musterabgleichswert für die Äußerungsklasse und dem sprecherabhängigen Musterabgleichswert für die Äußerungsklasse abhängt.

17. Verfahren nach Anspruch 1, wobei der Schritt des Durchführens und der Schritt des Kombinierens in einer Spracherkennungs-Engine (220) durchgeführt werden.

18. Ein Computerprogrammprodukt, das Instruktionen aufweist, welche, wenn ausgeführt durch einen Prozessor, dem Prozessor verursachen ein Verfahren nach einem der Ansprüche 1 bis 17 durchzuführen.

## Revendications

1. Procédé de reconnaissance vocale comprenant:
réaliser une concordance de motif entre un premier segment de parole d'entrée et au moins un premier modèle acoustique élémentaire à partir d'un modèle acoustique indépendant du locuteur (230, 232) pour produire au moins un score de concordance de motif d'entrée et pour déterminer une classe d'utérance reconnue, la classe d'utérance correspondant à un mot ou un segment de parole particulier ;
comparer ledit au moins un score de concordance de motif d'entrée avec un score correspondant associé à au moins un second modèle acoustique élémentaire à partir du modèle acoustique (234) du locuteur de la première parole d'entrée, le second modèle acoustique élémentaire étant associé à la classe d'utérance reconnue ; et
déterminer s'il faut ou non mettre à jour ledit au moins un second modèle acoustique élémentaire, ledit au moins un second modèle acoustique élémentaire étant mis à jour si ledit au moins un score de concordance de motif d'entrée est meilleur que le score correspondant associé audit au moins un second modèle acoustique élémentaire.

2. Procédé selon la revendication 1, dans lequel la réalisation de concordance de motif comprend en outre:
réaliser une concordance de motif (230) d'un modèle de Markov caché (HMM) du premier segment de parole d'entrée avec au moins un modèle élémentaire HMM pour produire au moins un score de concordance HMM ;
réaliser une concordance (232) de motif à enroulement temporel dynamique (DTW) du premier segment de parole d'entrée avec au moins un modèle élémentaire DTW pour produire au moins un score de concordance DTW ; et
réaliser au moins une somme pondérée dudit au moins un score de concordance HMM et dudit au moins un score de concordance DTW pour fournir ledit au moins un score de concordance de motif d'entrée.

3. Procédé selon la revendication 1, comprenant en outre:
produire au moins un score de concordance indépendant du locuteur en réalisant une concordance de motif d'un second segment de parole d'entrée avec ledit au moins un premier modèle acoustique élémentaire, ledit au moins un premier modèle acoustique élémentaire étant indépendant du locuteur ;
produire au moins un score de concordance dépendant du locuteur en réalisant une concordance de motif d'un second segment de parole d'entrée avec ledit au moins un second modèle acoustique élémentaire, ledit au moins un second modèle acoustique élémentaire étant dépendant du locuteur ; et
combiner ledit au moins un score de concordance indépendant du locuteur avec ledit au moins un score de concordance dépendant du locuteur pour produire au moins un score de concordance combiné.

4. Procédé selon la revendication 3, comprenant en outre l'identification de la classe d'utérance associée au meilleur dudit au moins un score de concordance combiné.

5. Procédé selon la revendication 1, ce procédé étant en outre destiné à réaliser un apprentissage et un test de reconnaissance vocale non supervisée, comprenant:
réaliser dans un moteur de reconnaissance vocale (220) une concordance de motif de parole d'entrée d'un locuteur qui contient un modèle acoustique indépendant du locuteur (230, 232) pour produire des scores de concordance de motif indépendants du locuteur ;
comparer les scores de concordance de motif indépendants du locuteur à des scores associés à des modèles élémentaires d'un modèle acoustique dépendant du locuteur (234) par le moteur de reconnaissance vocale (220), le modèle acoustique dépendant du locuteur étant adapté au locuteur ; et
si les scores de concordance de motif indépendants du locuteur sont meilleurs que les scores associés à des modèles élémentaires du modèle acoustique dépendant du locuteur (234), produire un nouveau modèle élémentaire pour le modèle acoustique dépendant du locuteur (234) sur la base des scores de concordance de motif indépendants du locuteur.

6. Procédé selon la revendication 5, dans lequel le modèle acoustique indépendant du locuteur (230, 232) comprend au moins un modèle acoustique de modèle de Markov caché (HMM).

7. Procédé selon la revendication 5, dans lequel le modèle acoustique indépendant du locuteur (230, 232) comprend au moins un modèle acoustique à enroulement temporel dynamique (DTW).

8. Procédé selon la revendication 5, dans lequel le modèle acoustique indépendant du locuteur (230, 232) comprend au moins un modèle acoustique de modèle de Markov caché (HMM) et au moins un modèle acoustique à enroulement temporel dynamique (DTW).

9. Procédé selon la revendication 5, dans lequel le modèle acoustique indépendant du locuteur (230, 232) comprend au moins un modèle à déchets, la comparaison comprenant la comparaison de la parole d'entrée à au moins un modèle à déchets.

10. Procédé selon la revendication 5, dans lequel le modèle acoustique dépendant du locuteur (234) comprend au moins un modèle acoustique à enroulement temporel dynamique (DTW).

11. Procédé selon la revendication 5, comprenant en outre:
configurer le moteur de reconnaissance vocale (220) pour comparer un second segment de parole d'entrée au contenu du modèle acoustique indépendant du locuteur et du modèle acoustique dépendant du locuteur pour produire au moins un score de concordance combiné dépendant du locuteur et indépendant du locuteur ; et
identifier une classe d'utérance ayant le meilleur score de concordance combiné dépendant du locuteur et indépendant du locuteur.

12. Procédé selon la revendication 11, dans lequel le modèle acoustique indépendant du locuteur (230, 232) comprend au moins un modèle acoustique (230) de modèle de Markov caché (HMM).

13. Procédé selon la revendication 11, dans lequel le modèle acoustique indépendant du locuteur (230, 232) comprend au moins un modèle acoustique (232) à enroulement temporel dynamique (DTW).

14. Procédé selon la revendication 11, dans lequel le modèle acoustique indépendant du locuteur (230, 232) comprend au moins un modèle acoustique (230) de modèle de Markov caché (HMM) et au moins un modèle acoustique (232) à enroulement temporel dynamique (DTW).

15. Procédé selon la revendication 11, dans lequel le modèle acoustique dépendant du locuteur (234) comprend au moins un modèle acoustique à enroulement temporel dynamique (DTW).

16. Procédé selon la revendication 1, comprenant en outre :
réaliser une concordance de motif du segment de parole d'entrée avec un modèle acoustique dépendant du locuteur pour produire au moins un score de concordance dépendant du locuteur ; et
combiner ledit score de concordance indépendant du locuteur avec ledit au moins un score de concordance dépendant du locuteur pour produire au moins un score de concordance combiné, chaque score de concordance combiné correspondant à une classe d'utérance et dépendant du score de concordance de motif indépendant du locuteur pour la classe d'utérance et du score de concordance de motif dépendant du locuteur pour la classe d'utérance.

17. Procédé selon la revendication 1, dans lequel l'étape de réalisation et l'étape de combinaison sont mises en oeuvre par un moteur de reconnaissance vocale (220).

18. Produit programme d'ordinateur, comprenant des instructions qui, quand elles sont exécutées par un processeur, amènent le processeur à mettre en oeuvre le procédé de l'une quelconque des revendications 1 à 17.
